# EUROPEAN PATENT APPLICATION

(11) **EP 2 527 709 A1**
(43) Date of publication of application: **28.11.2012**
(21) Application number: 11167740.7
(22) Date of filing: 26.05.2011
(51) Int. Cl.: F16L 55/26, G01N 29/265, G01N 29/28

(54) **Apparatus for pipeline inspection**

(71) Applicant: Pii Limited, Cramlington, Northumberland NE23 1WW (GB)
(72) Inventor: Palma, Robert, Northumberland NE23 1WW (GB); Herron, William, Northumberland NE23 1WW (GB)
(74) Representative: McWilliams, David John

(57) **Abstract**

An apparatus (10) for pipeline inspection includes a sensor unit (14) having an array of ultrasonic sensors (16) for inspecting a pipe wall. The sensor unit (14) includes a skid (18) having an outer surface (20) intended to run adjacent or in contact with a pipe wall. The sensors (16) are arranged in a recess (65) at a predetermined stand off from the outer surface (20) of the skid (18), and the sensor unit (14) includes a flushing system for directing pipeline fluid through the recess (65), for removing debris from within the recess (65) when the skid (18) is pushed up against the pipe wall.

## Description

The present disclosure relates to a pipeline inspection apparatus.

It is known to carry out inspection of a pipeline using an apparatus (commonly referred to as a pipeline "pig"), which travels inside the pipeline to measure or detect defects in the wall of the pipeline.

Such an apparatus may include an array of ultrasonic sensors for measuring the wall thickness of the pipeline and/or for detecting cracks in the wall of a pipeline. Typically, the ultrasonic sensors are mounted on a skid, which is designed to run adjacent or in contact with a pipe wall, e.g. as a pig carries out an inspection run through a pipeline. The sensors are arranged at a stand off from the outer surface of the skid, in order to protect the sensors against wear or other damage from contact with the pipe wall.

A problem arises if debris from within the pipeline collects over the inspection surface of the ultrasonic sensors, e.g. within the stand off region. Hence, it is know for skids to include a flushing system for directing a flow of pipeline fluid over the inspection surface of the sensors, in order to flush away debris as the apparatus travels along the pipeline. However, conventional flushing systems typically consist of retro-fit installations to existing skids, the installation and maintenance of which is not straight forward. Moreover, convention flushing systems operate with variable results.

The disclosure proposes a pipeline apparatus which overcomes or mitigates one or more of the above problems, or other disadvantages or problems associated with conventional skids for inline inspection of pipelines using ultrasonic sensors.

The disclosure provides an apparatus for pipeline inspection, the apparatus comprising a body having a longitudinal axis and a sensor unit in association with said body, wherein the sensor unit includes an array of ultrasonic sensors for inspecting a pipe wall, and further includes a skid having an outer surface intended to run adjacent or in contact with a pipe wall, wherein the sensor unit includes a recess and the sensors are arranged in said recess, at a predetermined stand off from the outer surface of the skid, and further wherein the sensor unit includes a flushing system for directing pipeline fluid through said recess and flushing debris from the recess when the outer surface of the skid is in contact with a pipe wall.

In exemplary embodiments, the apparatus includes a mechanism for biasing the outer surface of the skid into contact with a pipe wall.

In exemplary embodiments, said mechanism is configured for permitting movement of the sensor unit between a first position and a second position relative to the longitudinal axis in response to changes in pipe diameter, e.g. outwards in response to an increase in pipe diameter and/or inwards in response to a decrease in pipe diameter.

In exemplary embodiments, the mechanism is configured for movement of the sensor unit between an extended position (e.g. for inspection of a pipe line having a first diameter) and a retracted position (e.g. for inspection of the same or a different pipe line having a second diameter).

In exemplary embodiments, the mechanism is configured for biasing the sensor unit in the direction of a pipe wall in said extended position and said retracted position. In exemplary embodiments, the mechanism is configured for biasing the sensor unit in the direction of a pipe wall in one or more positions intermediate said extended position and said retracted position.

In exemplary embodiments, said mechanism includes suspension members configured for biasing the sensor unit outwards (e.g. in a radial direction). In exemplary embodiments, the mechanism includes first and second suspension members axially off set from one another with respect to the longitudinal axis of the body. Said first and second suspension members may be configured to pivot relative to said longitudinal axis of the body.

In exemplary embodiments, said suspension members form part of a linkage configured for movement of the sensor unit with respect to the longitudinal axis of the body, e.g. between a first position and a second position in response to changes in pipe diameter.

In exemplary embodiments, said mechanism defines a collapsible linkage arranged to permit inward movement of the sensor unit with respect to the longitudinal axis of the body (e.g. in a radial direction) in response to a decrease in pipe diameter.

In exemplary embodiments, the linkage includes a carrier for the sensor unit, wherein the linkage is configured for biasing the carrier in the direction of a pipe wall through changes in pipe diameter.

In exemplary embodiments, the sensor unit is mounted on said carrier and is locally biased in an outward direction on said carrier, e.g. via biasing elements on said carrier. In an exemplary embodiment, the sensor unit is mounted on said carrier and the carrier includes spring elements (e.g. leaf springs arranged to act on an underside of the sensor unit), for biasing the sensor unit in an outward direction relative to the longitudinal axis of the body.

In exemplary embodiments, said linkage includes first and second suspension members arranged to pivot relative to said longitudinal axis of the body, for movement of the carrier relative to the longitudinal axis of the body.

In exemplary embodiments, the sensor unit is mounted on a carrier, said carrier is mounted between first and second suspension members for biasing the outer surface of the skid into contact with a pipe wall and arranged to pivot relative to said longitudinal axis of the body, for movement of the sensor unit between a first position and a second position in response to changes in pipe diameter.

In exemplary embodiments, said carrier includes biasing elements for locally biasing the sensor unit in an outward direction. In exemplary embodiments, said carrier is arranged for movement with said first and second suspension members, and said carrier is arranged to remain parallel with said longitudinal axis of the body during movement of the sensor unit in response to changes in pipe diameter.

In exemplary embodiments, said the apparatus includes multiple sensor units movably mounted on said body in response to changes in pipe diameter. The multiple sensor units may be arranged in one or more rings about the longitudinal axis of the body. The accompanying drawings, which are incorporated in and constitute a part of the specification, illustrate one or more embodiments and, together with the description, explain these embodiments. In the drawings:
Figure 1 is a schematic perspective view of a vessel forming part of an apparatus for pipeline inspection;
Figure 2 is a schematic perspective view of a sensor unit and carrier for use in the embodiment of Figure 1;
Figure 3 is a schematic perspective view of the carrier in Figures 1 and 2;
Figure 4 is a schematic perspective view of a vessel similar to the vessel in Figure 1, but including multiple sensor units;
Figure 5 is a schematic diagram showing a vessel of the kind shown in Figure 4 operable through a pipeline having multiple bore diameters;
Figure 6 is a schematic perspective view from the upper side of an alternative sensor holder for use on the apparatus of Figure 1;
Figure 7 is a schematic perspective view from the underside of the sensor holder in Figure 6; and
Figure 8 is a schematic perspective view of a flushing collector for use with the sensor holder of Figures 6 and 7.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

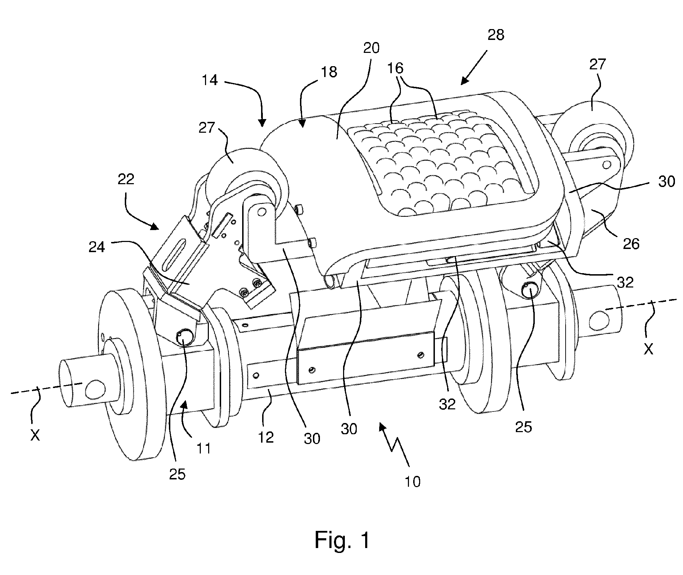

Referring firstly to Figure 1, part of a pipeline inspection apparatus for in-line inspection of pipelines is indicated generally at 10.

The apparatus 10 includes a vessel 11 having a central body 12 and a longitudinal axis X (extending left to right as viewed in Figure 1). A sensor unit 14 is mounted on said body 12. The sensor unit 14 includes an array of ultrasonic sensors 16 for inspecting a pipe wall.

The sensor unit 14 includes a skid 18 having an outer surface 20 intended to run adjacent or in contact with a pipe wall, in use. The outer surface 20 is arcuate in a circumferential direction with respect to the longitudinal axis X. The sensors 16 also define an arcuate inspection plane in a circumferential direction with respect to the longitudinal axis X.

The upper surface of the sensors is arranged at a stand off from the outer surface of the skid 18 (e.g. radially inward of the outer surface 20), for protecting the sensors 16 against wear or other damage from contact with the pipe wall.

The ultrasonic sensors 16 within the inspection array can be orientated normally to the pipe wall for wall thickness evaluation or at an angle to the pipe wall so as to induce shear waves and identify any cracks in the pipeline, for example.

The apparatus 10 includes a spring-loaded mechanism 22 for permitting movement of the sensor unit 14 with respect to the longitudinal axis of the central body 12, e.g. in response to changes in bore diameter.

The mechanism 22 is configured for biasing the sensor unit 14 in a generally radial direction, in order to bias the outer surface 20 of the skid 18 in the direction of a pipe wall. More particularly, the mechanism 22 is configured for moving the sensor unit 14 between a first radial position (e.g. a retracted position for use in a small diameter bore) and a second radial position (e.g. an extended position for use in a large diameter bore), in response to changes in pipe diameter. The mechanism 22 is configured to position the sensor unit 14 at an appropriate radial position (e.g. intermediate said first and second radial positions), depending on the size of the bore through which the apparatus 10 is passing. Hence, the apparatus 10 can be used for inspection of multi-diameter pipelines or across a range of pipelines having different diameters.

The mechanism 22 includes first and second suspension members 24, 26 configured for biasing the sensor unit 14 in the direction of a pipe wall (e.g. in a radial or outward direction relative to the longitudinal axis X). The first and second suspension members 24, 26 are axially off set from one another, with respect to the longitudinal axis of the central body 12.

The first and second suspension members 24, 26 are connected to body 12 by a spring-biased pivotal connection 25, so as to be configured to pivot relative to said longitudinal axis of the central body 12. The suspension members 24, 26 are biased towards said second radial position (i.e. an extended position relative to the body 12). Hence, the suspension members 24, 26 act as spring-biased struts or arms which are movable relative to the central body 12 of the vessel 11, for positioning the sensor unit 14 adjacent the pipe wall.

A roller 27 is provided at the end of each suspension member 24, 26, for rolling contact with the internal surface of a pipe along which the apparatus is travelling, in use.

The first and second suspension members 24, 26 form part of a linkage 28, which is configured for movement of the sensor unit 14 radially with respect to the longitudinal axis of the central body 12, e.g. between the first radial position and second radial position, in response to changes in bore diameter as the suspension rollers 27 react against the pipe wall.

The linkage 28 includes a carrier 30 arranged for movement with said first and second suspension members 24, 26. The sensor unit 14 is mounted on said carrier 30.

The carrier 30 is mounted between the first and second suspension members 24, 26, and the carrier 30 is arranged to remain parallel with the longitudinal axis of the central body 12 during movement of the sensor unit 14.

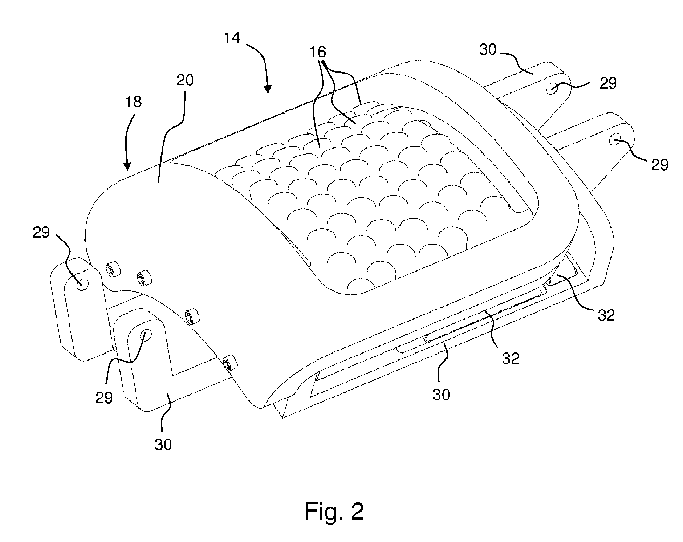

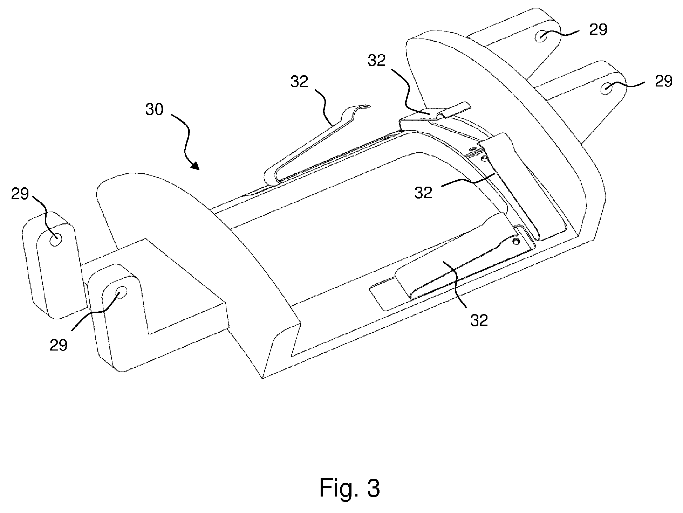

As can be seen clearly in Figures 2 and 3, the carrier 30 includes pivot points 29 for connection to the first and second suspension members 24, 26.

As can be seen most clearly in Figure 3, the carrier 30 biasing elements in the form of leaf springs 32, which are arranged beneath the sensor unit 14. The biasing elements provide local biasing of the sensor unit 14 relative to the longitudinal axis of the central body 12, e.g. in the direction of the pipe wall.

The spring-loaded mechanism 22 ensures that the sensors 16 are deployed adjacent the pipe wall, even in bends (where conventional systems fail or are highly unreliable). Moreover, the localised biasing of the sensor unit 14 on the carrier 30 assists in providing correct orientation and clamping force of the skid 18 against the pipe wall.

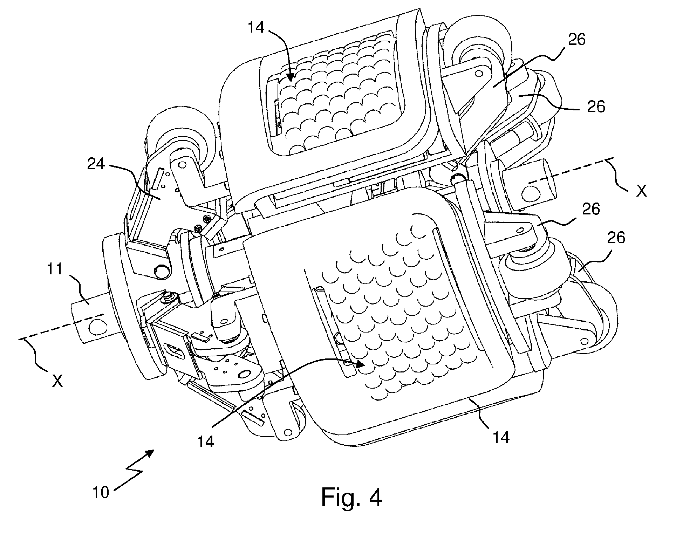

As shown in Figure 4, the vessel 11 may be provided with multiple sensor units 14, each of which is movably mounted on said central body 12 in the manner described above. In the exemplary embodiment of Figure 4, the vessel 11 includes four sensor units (only 3 of which are visible as viewed in Figure 4) arranged at 90 degrees to one another in a ring about the longitudinal axis X.

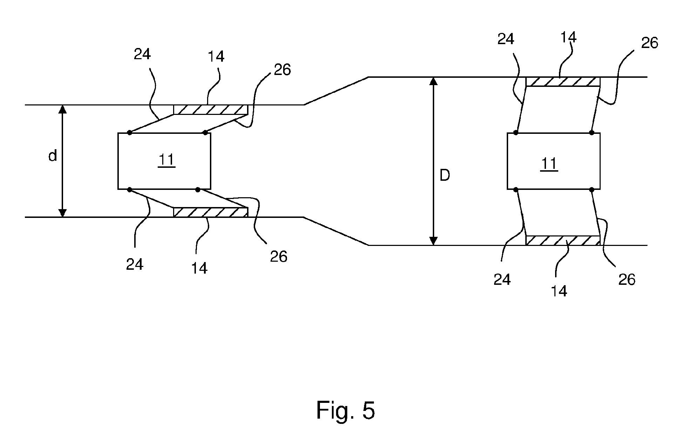

The apparatus 10 is suited for use inspecting a pipeline having a first section with a first bore diameter and a second section with a second bore diameter (i.e. less than or greater than the first bore diameter). The apparatus 10 can be sent on a continuous run through said first and second sections of the pipeline. The mechanism 22 is used to bias the sensor unit 14 against an inner surface of the first section and to automatically bias the sensor unit 14 against an inner surface of the second section upon a change in bore diameter between said first and second sections of the pipeline. An example is shown in Figure 5.

The apparatus 10 permits accurate modelling of the biasing forces required to maintain the skid 18 in contact with the pipe wall, providing a significant improvement over conventional skid designs.

The apparatus 10 is advantageous, at least insofar as it should reduce the time required to design a skid for a given diameter of pipe, by allowing the required forces to be calculated in an early stage in the design procedure, reducing or obviating the need for optimisation loops and other acts of trial and error.

Moreover, the linkage 28 permits use of the apparatus across a range of pipeline diameters, including improved tracking of the pipe bore, especially in bends and through restrictive pipeline features such as tapers, valves, etc.

Each linkage 28 can move independently with respect to the other linkages 28 on the vessel 11. This enables the apparatus to pass through and inspect tight bend diameters and difficult or restrictive pipeline features such as tapers, valves, etc. It is envisaged that exemplary embodiments will be cable of inspection through 1D bends and mitre bends.

In the exemplary embodiment of Figure 1, the linkage 28 takes the form of a 4-bar linkage, consisting of the body 12, suspension members 24, 26 and carrier 30. Other forms of collapsible linkage may be applicable, e.g. a 5-bar linkage including said suspension members 24, 26, configured to ensure that the sensor unit 14 tracks the pipe wall irrespective of the attitude of the internal pig body 12 within the pipeline.

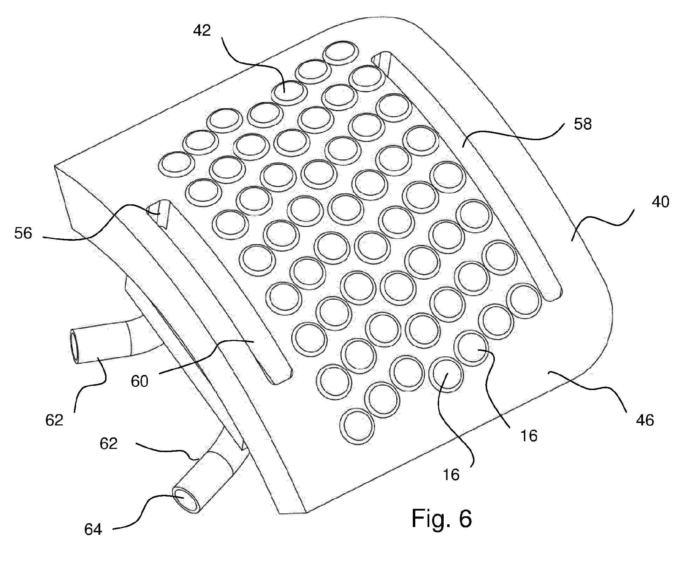

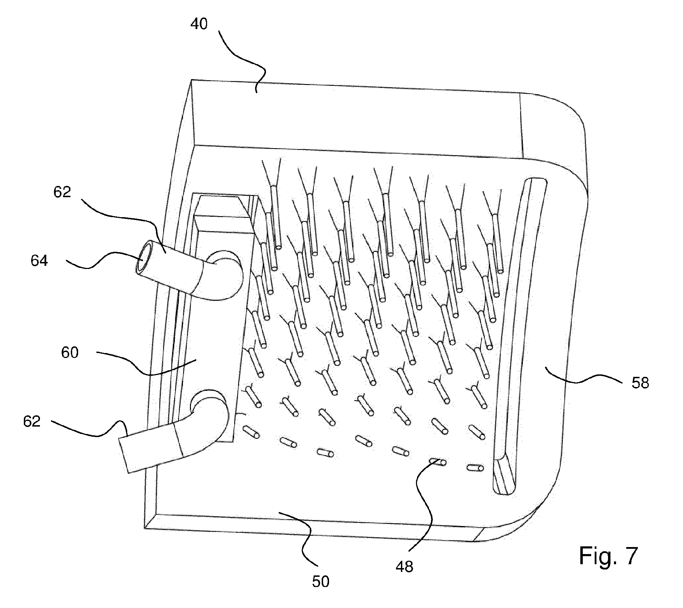

In the illustrated embodiment, the ultrasonic sensors 16 are held in a tight array of rows and columns on a sensor holder 40. As can be seen clearly from Figures 6 and 7, the sensors 40 are sealingly embedded within the sensor holder 40. Each sensor 16 has an upper surface 42 which projects from the upper surface 46 sensor holder 40 by a predetermined amount. Each sensor 16 has an output end 48 which projects from an underside 50 of the sensor holder 40.

The upper surfaces 42 of the sensors 16 define an arcuate inspection plane intended to extend in a circumferential direction with respect to the longitudinal axis X of the vessel 11 on which the sensor holder 40 is mounted.

As can be seen from Figure 1, the upper surfaces 42 of the sensors 16 are arranged at a predetermined distance from the outer surface 20 of the skid 18. In effect, the sensors 16 are arranged in a recess 65 on the sensor unit 14, e.g. defined by the skid 18 and an upper surface 46 of the sensor holder 40. The recess 65 is enclosed when the skid 18 is pushed up against a pipe wall.

The sensor unit 14 includes a flushing system for flushing debris from the recess, including a flushing inlet 52 for pipeline fluid to enter the recess 65 and a flushing outlet 54 for pipeline fluid to flow out of the recess 65 when the skid is pushed up against a pipe wall. The flushing outlet 54 is spaced downstream from said flushing inlet 52. Moreover, the flushing inlet 52 is upstream of the sensors 16 and the flushing outlet is downstream of the sensors 16.

The flushing inlet 52 and flushing outlet 54 each consist of a flushing passageway 56 which extends through the sensor holder 40 (e.g. from the upper side 46 to the underside 50). In the illustrated embodiment, the flushing inlet 52 and flushing outlet 54 are of elongate form, extending in a generally circumferential direction with respect to the longitudinal axis X of the vessel 11 on which the sensor unit 14 is mounted.

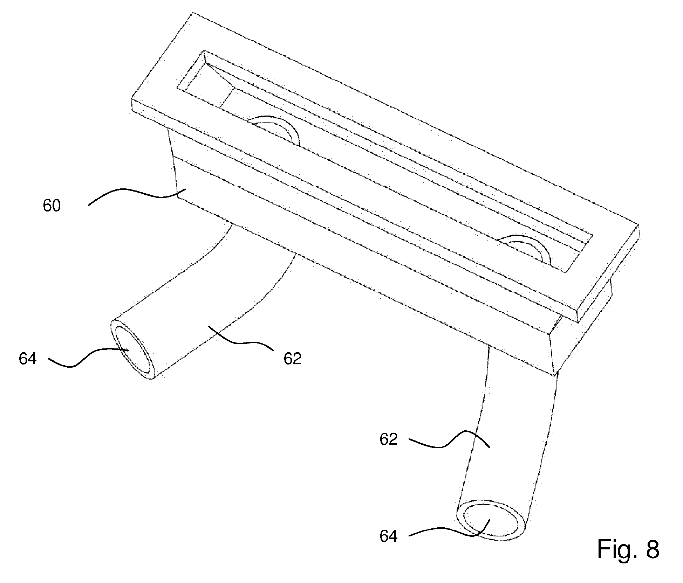

A flushing collector 58, e.g. of the kind shown in Figure 8, may be fitted in or form part of the flushing inlet 52. The flushing collector 58 includes guide pipes 60 (one of which is viewable in Figure 1), which extend beneath the sensor holder 40 and have an inlet facing in an upstream direction. The guide pipes are configured for channelling fluid from within the pipeline into the recess 65 via the flushing inlet 52.

If the outer surface 20 of the skid 18 is biased against the internal surface of a pipe along which the apparatus 10 is travelling, the recess 65 will be enclosed or substantially enclosed against the pipe wall (e.g. with a periphery of the membrane region in contact or close proximity to the pipe wall). Hence, pipeline fluid entering said recess 65 from said flushing inlet 52 will flow over the top of the sensors 16, across the upper surface 46 of the sensor holder 40, and down through the flushing outlet 54. The flow of fluid in this manner is intended to dislodge and carry away debris and the like which may have collected, or which might otherwise attempt to collect, on the holder 40. This arrangement should be more effective than flushing systems for conventional skid designs.

The flushing collector 58 of the kind shown in Figure 8 is easy to install, and the provision of a biasing mechanism 22 and/or local biasing of the skid 18 against the pipe wall provides a particularly effective flushing system.

Although Figure 1 is described with spring-loaded suspension members in the form of pivotable arms or struts, other types of suspension may be employed. Although Figure 3 is described with leaf springs for local biasing of the sensor unit on the carrier, other forms of resilient biasing element may be incorporated. Although Figure 4 shows an embodiment having a ring of four sensor units, other embodiments may consist of three or more sensor units per ring. Multiple rings of sensor units may be included per vessel 11.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for pipeline inspection, the apparatus comprising a body having a longitudinal axis and a sensor unit in association with said body, wherein the sensor unit includes an array of ultrasonic sensors for inspecting a pipe wall, and further includes a skid having an outer surface intended to run adjacent or in contact with a pipe wall,
wherein the sensor unit includes a recess and the sensors are arranged in said recess, at a predetermined stand off from the outer surface of the skid, and further wherein the sensor unit includes a flushing system for directing pipeline fluid through said recess and flushing debris from the recess when the outer surface of the skid is in contact with a pipe wall.

2. Apparatus according to claim 1 wherein the outer surface of the skid defines a periphery of the recess and the recess is arranged to be enclosed or substantially enclosed by a pipe wall when the periphery of the recess is in contact with said pipe wall.

3. Apparatus according to claim 1 wherein the sensors are sealingly mounted on a sensor holder, and further wherein an upper surface of the sensor holder defines a wall of the recess for the passage of flushing fluid over said upper surface.

4. Apparatus according to claim 3 including a flushing inlet is provided in the sensor holder, for pipeline fluid to enter the recess.

5. Apparatus according to claim 4 including a flushing outlet spaced downstream from said flushing inlet, for pipeline fluid to flow out of the recess.

6. Apparatus according to claim 5 wherein the flushing outlet is formed in the sensor holder.

7. Apparatus according to claim 1 wherein the flushing system includes a flushing collector having one or more guides with an inlet facing in an upstream direction and configured for channelling fluid from within the pipeline into said recess.

8. Apparatus according to claim 1 wherein the apparatus includes a plurality of said sensor units arranged in a circumferentially spaced array, wherein the sensor units are arranged for movement between a first radial position and a second radial position in response to changes in pipe diameter, and are biased towards an extended position for biasing the outer surface of a respective skid into contact with a pipe wall in said first and second radial positions, to enclose or substantially enclose a respective recess against said pipe wall.

9. Apparatus according to claim 1 wherein the apparatus includes a mechanism for biasing the outer surface of the skid into contact with a pipe wall, for enclosing or substantially enclosing the recess against said pipe wall.

10. Apparatus according to claim 9 wherein the mechanism is configured for permitting movement of the sensor unit between a first position and a second position relative to the longitudinal axis in response to changes in pipe diameter.

11. Apparatus according to claim 10 wherein the mechanism includes at least one arm or strut for deploying the sensor unit adjacent a pipe wall.

12. Apparatus according to claim 9 wherein the mechanism includes first and second suspension members axially off set from one another with respect to the longitudinal axis of the body, and configured to pivot relative to said longitudinal axis of the body.

13. Apparatus according to claim 9 wherein the mechanism defines a collapsible linkage arranged to permit inward movement of the sensor unit with respect to the longitudinal axis of the body in response to a decrease in pipe diameter.

14. Apparatus according to claim 13 wherein the linkage includes a carrier for the sensor unit, wherein the linkage is configured for biasing the carrier in the direction of a pipe wall through changes in pipe diameter.

15. Apparatus according to claim 14 wherein the sensor unit is mounted on said carrier and is locally biased in an outward direction on said carrier, for biasing the skid into contact with a pipe wall.
